# EUROPEAN PATENT SPECIFICATION

(11) **EP 4 391 184 B1**
(45) Date of publication and mention of the grant of the patent: **05.11.2025**
(21) Application number: 23855092.5
(22) Date of filing: 07.08.2023
(51) Int. Cl.: H01M 50/30, H01M 50/383, H01M 50/342, H01M 50/289, H01M 50/367, H01M 50/271, H01M 50/249, H01M 50/204

(54) **BATTERY PACK HAVING DOUBLE TOP COVER WITH VENTING GAS PASSAGE**
BATTERIEPACK MIT DOPPELTER ABDECKUNG MIT GASENTLADUNGSKANAL
BLOC-BATTERIE AYANT UN COUVERCLE SUPÉRIEUR DOUBLE À PASSAGE DE DÉCHARGE DE GAZ

(30) Priority: 17.08.2022 KR 20220102972
(43) Date of publication of application: 26.06.2024
(73) Proprietor: LG Energy Solution, Ltd., Seoul 07335 (KR)
(72) Inventor: LEE, Jung-Hoon, Daejeon 34122 (KR); KIM, Byoung-Chul, Daejeon 34122 (KR)
(74) Representative: Plasseraud IP
(86) International application number: PCT/KR2023/011617
(87) International publication number: WO 2024/039125

(56) References cited:
- WO-A1-2022/133780
- DE-A1- 102011 054 775
- JP-A- 2011 204 574
- JP-A- 2021 174 673
- KR-A- 20130 054 310
- KR-A- 20180 113 855
- KR-A- 20210 128 814
- KR-A- 20210 150 979
- US-A1- 2011 236 734
- US-A1- 2020 112 009
- US-A1- 2020 403 201

## Description

### TECHNICAL FIELD

The present application claims priority to Korean Patent Application No. 10-2022-0102972 filed on August 17, 2022 in the Republic of Korea.

The present disclosure relates to a battery pack, and more particularly, to a battery pack for allowing gases to be easily vented to the outdoors and preventing leakage of flames or high temperature particles in the event of a fire in a battery module, thereby preventing or delaying the fire spread to adjacent other battery modules.

### BACKGROUND ART

As opposed to primary batteries that cannot be used again after they are used once, secondary batteries convert electrical energy to chemical energy and can be recharged in a semi-permanent manner.

Secondary batteries include lithium secondary batteries, nickel-cadmium (Ni-Cd) batteries, lead-acid batteries, nickel-hydrogen (Ni-MH) batteries, zinc-air batteries, alkaline manganese batteries and the like. Among them, lead-acid batteries and lithium secondary batteries are the most popular secondary batteries.

In particular, lithium secondary batteries have high energy storage density, light weight, compact size, high safety, low discharge rate and long life, and due to these advantages, they are being widely used as electric car batteries in recent years. For reference, in general, lithium secondary batteries are classified into cylindrical, prismatic and pouch type according to the manufacturing process, and have a wide range of applications including electric cars as well as energy storage systems (ESS) and other electric devices.

Currently, a lithium secondary battery cell has an operating voltage of about 2.5V to 4.5V. Accordingly, to use secondary batteries as an energy source for electric vehicles, a plurality of lithium ion battery cells is connected in series and/or in parallel to form a battery module, and battery modules are connected in series and/or in parallel to form a battery pack.

Since secondary batteries involve chemical reactions during charging and discharging, when they are used in higher temperature environments than the optimal temperature, performance degradation may occur, and in the case where thermal control to the optimal temperature fails, there are unexpected fire or explosion risks. Additionally, since the battery module has a structure in which secondary batteries are densely packed in a module housing, when thermal runaway (heat propagation) occurs or is triggered in any one secondary battery, a large amount of gases may be generated from secondary batteries, and in worse cases, flames and high temperature particles including electrode active materials and aluminum particles may be produced, and during gas venting, the flames and high temperature particles may come out of the corresponding battery module, causing thermal damage to other battery module adjacent to the corresponding battery module, accelerating fires in other battery modules.

Accordingly, there is an urgent need for an improved structure of a battery pack for allowing gases to be easily vented to the outdoors and preventing leakage of flames and high temperature sparks in the event of a fire in a battery module. An example of thermal runaway prevention in battery packs can be found in US 2020/403201 A1. An example of electrochemical cell enclosure including a flame arrestor can be found in US 2020/112009 A1.

### SUMMARY

### Technical Problem

To address the above-described problems, the present disclosure is directed to providing a battery pack for allowing gases to be easily vented to the outdoors through a vent passage and preventing leakage of flames or high temperature particles in the event of a fire in a battery module, thereby preventing or delaying the fire spread to adjacent other battery modules.

The technical problem to be solved by the present disclosure is not limited to the above-described problems, and these and other problems will be clearly understood by those skilled in the art from the following description.

### Technical Solution

A battery pack according to the present disclosure is defined in accordance with claim 1.

The top plate portion may further include a flame-retardant pad layer below the lower plate, and the flame-retardant pad layer may have a vent slit in an area corresponding to the venting holes of the lower plate, wherein the vent slit is configured to be torn when higher pressure than an allowable pressure is applied.

The flame barrier mesh layer may have a mesh structure.

The pack tray may have an internal partition wall to separate spaces in which the battery modules are disposed, and the top plate portion may be fixed and coupled to the pack tray and the internal partition wall.

The top plate portion may be coupled to the pack tray and the internal partition wall with fixing screws, and a sealing member may be disposed between the top plate portion and the pack tray.

The flame-retardant pad layer may include an inlet region portion on a side of the battery module, wherein the inlet region portion is tapered inward in a thicknesswise direction to guide entry of the venting gas.

The flame-retardant pad layer may include an outlet region portion on a side of the lower plate, wherein the outlet region portion is tapered to expand as much as an inner diameter of the venting hole.

The vent slit may be in a shape of an H- or I-shaped cut dashed line.

The vent slit may include a plurality of oval or elliptical shapes having a gradual increase in size.

According to another aspect of the present disclosure, there is provided a vehicle including the battery pack.

### Advantageous Effects

According to an aspect of the present disclosure, it may be possible to easily vent gases to the outdoors through the vent passage and prevent leakage of flames or high temperature particles in the event of a fire in a battery module, thereby preventing or delaying the fire spread to adjacent other battery modules.

It may be possible to minimize thermal damage that may occur to other battery modules due to gases and sparks generated from the battery module in which the fire occurred, thereby enhancing durability of the battery pack and reducing the maintenance and repair costs.

The effect of the present disclosure is not limited to the above-described effects, and these and other effects will be clearly understood by those skilled in the art from this disclosure and the accompanying drawings.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a schematic perspective view of a battery pack according to an embodiment of the present disclosure.
FIG. 2 is an exploded perspective view of the main components of the battery pack of FIG. 1.
FIG. 3 is a schematic perspective view of a top plate portion of FIG. 2.
FIG. 4 is a partial cutaway perspective view of a top plate portion according to an embodiment of the present disclosure.
FIG. 5 is a schematic bottom view of a top plate portion according to an embodiment of the present disclosure.
FIG. 6 is a schematic longitudinal cross-sectional view of a battery pack according to an embodiment of the present disclosure, taken along an X axis direction.
FIG. 7 is a diagram showing a vent path of venting gas along a passage in a battery pack according to an embodiment of the present disclosure.
FIG. 8 is a schematic cross-sectional view and a bottom view of a flame-retardant pad layer according to another embodiment of the present disclosure.
FIG. 9 is a schematic longitudinal cross-sectional view of a battery pack including a top plate portion with a flame-retardant pad layer according to another embodiment of the present disclosure.
FIG. 10 is a diagram showing a different shape of a vent slit according to still another embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation. Therefore, the embodiments described herein and the illustrations shown in the drawings are exemplary embodiments of the present disclosure to describe the technical aspect of the present disclosure and are not intended to be limiting, so it should be understood that a variety of modifications could be made within the scope of the invention as defined by the claims.

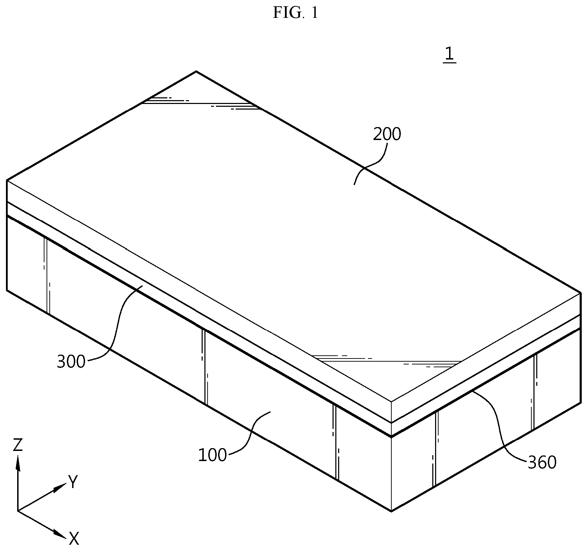

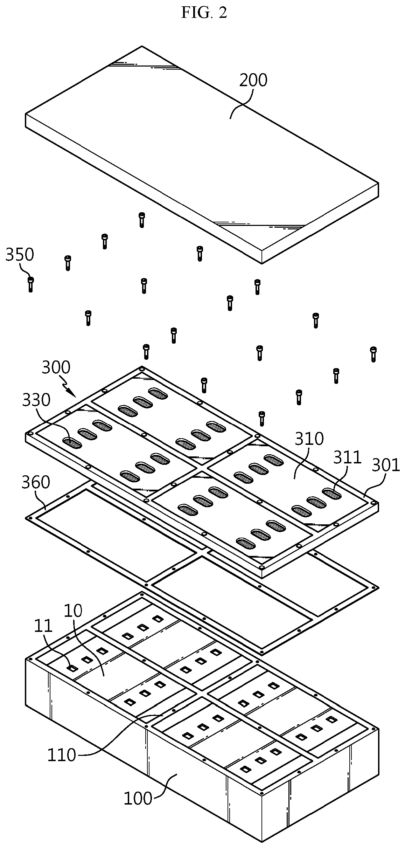

FIG. 1 is a schematic perspective view of a battery pack according to an embodiment of the present disclosure, and FIG. 2 is an exploded perspective view of the main components of the battery pack of FIG. 1.

The battery pack 1 according to this embodiment includes a pack tray 100 accommodating at least one battery module 10; a pack cover 200 covering the top of the pack tray 100, and having a vent passage of venting gases inside; and a top plate portion 300 disposed between the pack tray 100 and the pack cover 200, and having a lower part facing the battery module 10 and an upper part communicating with the vent passage, and configured to selectively vent only gases among flames, high temperature particles and gases generated from the battery module 10.

The pack tray 100 is the component for protecting the battery modules 10 from external impacts, and may be made of a material having high mechanical strength, and as shown in FIGS. 1 and 2, accommodates the at least one battery module 10.

The pack tray 100 has a plurality of internal partition walls 110 to separate spaces in which the battery modules 10 are disposed. Although this embodiment shows the pack tray 100 accommodating four battery modules 10, the scope of protection of the present disclosure is not limited to the number of battery modules 10 or the number of internal partition walls 110 of this embodiment.

The pack cover 200 is configured to cover the top of the pack tray 100, and has the vent passage 210 of venting gases. The vent passage 210 may be a sort of gas discharge space or retention or temporary storage space, and although not shown, may have a partition wall, a slit or a baffle to guide a plurality of vent paths. Additionally, for example, bolting, welding, adhesion, hooking or any other coupling method may be used to couple the pack tray 100 to the pack cover 200.

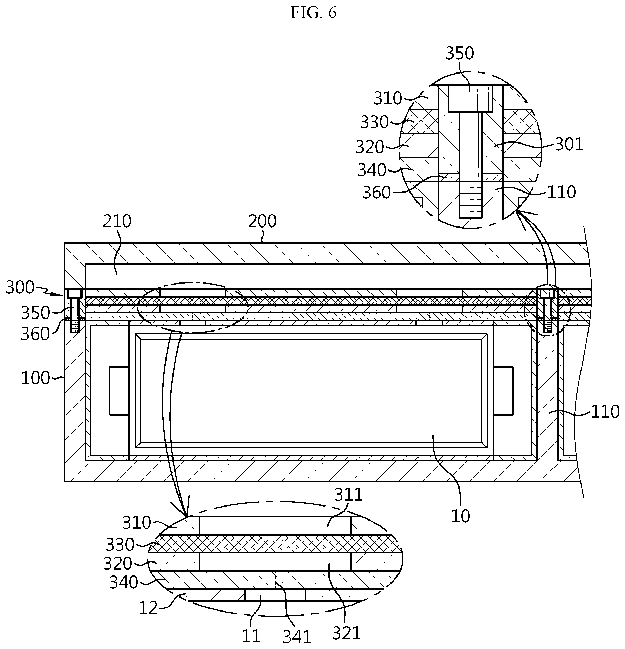

The battery module 10 is surrounded by a module case 12 (see FIG. 6) when received in the pack tray 100. The module case 12 has a plurality of holes 11 at two regions on the upper surface, and through which venting gases are vented in the event of a fire in the battery module 10.

Meanwhile, there is an urgent need for improved structure of the battery pack for allowing gases to be easily vented to the outdoors and preventing leakage of flames and high temperature sparks in the event of a fire in the battery module 10, and accordingly, this embodiment discloses top covering of double structure having the vent passage on top of the battery module 10 with the top plate portion 300 interposed between the pack tray 100 and the pack cover 200.

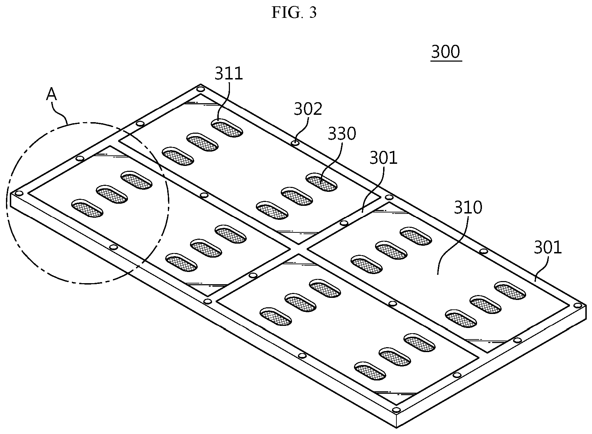

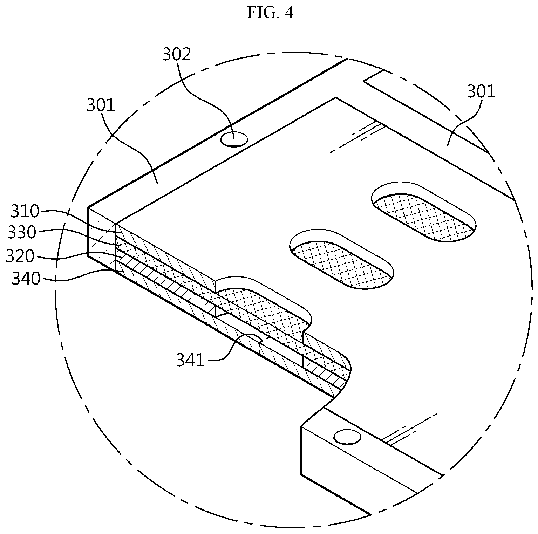

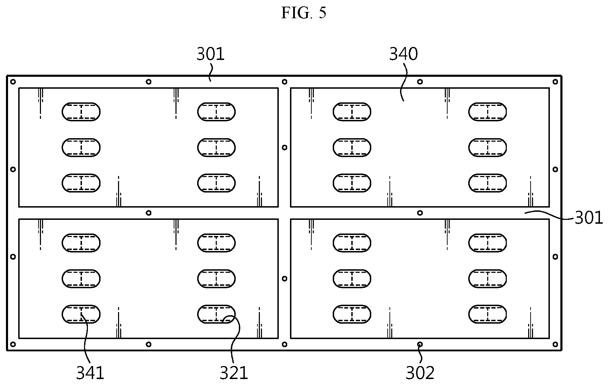

FIG. 3 is a schematic perspective view of the top plate portion of FIG. 2, FIG. 4 is a partial cutaway perspective view of the top plate portion according to an embodiment of the present disclosure, FIG. 5 is a schematic bottom view of the top plate portion according to an embodiment of the present disclosure, and FIG. 6 is a schematic longitudinal cross-sectional view of the battery pack according to an embodiment of the present disclosure, taken along an X axis direction.

The top plate portion 300 is disposed between the pack tray 100 and the pack cover 200 such that the lower part faces the battery module 10 and the upper part communicates with the vent passage 210, and configured to selectively vent only gases among flames, high temperature particles and gases generated from the battery module 10.

To this end, the top plate portion 300 includes a support frame 301 provided in a shape of framework; upper and lower plates 310, 320 stacked upon each other, with edges supported by the support frame 301, and having venting holes 311, 321 through which venting gases are vented, respectively; a flame barrier mesh layer 330 between the upper and lower plates 310, 320 to prevent leakage of flames or high temperature particles; and a flame-retardant pad layer 340 below the lower plate 320.

The support frame 301 is the framework of the top plate portion 300. The support frame 301 accommodates the upper plate and the lower plate, and the support frame 301 is mounted and supported on the upper surface of the pack tray 100 and the internal partition wall 110. The support frame 301 has a plurality of screw coupling holes 302, and is screw-coupled along the periphery of the battery module 10 at an area on top of the battery module 10 through fixing screws 350. Meanwhile, in this embodiment, the support frame 301 may be made of a material having high mechanical strength.

The upper plate 310 has a size corresponding to the size of the battery module 10 to cover the open top of the battery module 10. Additionally, the upper plate 310 is disposed inside the support frame 301 and when disposed inside the support frame 301, there is no height difference between the plate surface of the upper plate 310 and the plate surface of the support frame 301, but in terms of convenience in processing or assembling, the plate surface of the upper plate 310 may be higher or lower than the plate surface of the support frame 301. Meanwhile, in this embodiment, the upper plate 310 is made of stainless steel (SUS) and has high heat absorption and thermal conductivity and high durability against high temperature gases or sparks.

The lower plate 320 has substantially the same size and shape as the upper plate 310, and is also made of SUS.

The plate surface of the upper and lower plates 310, 320 has the plurality of venting holes 311, 321 at the location corresponding to the holes 11 of the battery module 10. The venting gases may be vented through the venting holes 311, 321.

Referring primarily to FIGS. 4 and 6, the flame barrier mesh layer 330 is interposed between the upper and lower plates 310, 320. That is, the flame barrier mesh layer 330 closes the venting holes 311, 321 between the upper and lower plates 310, 320. The flame barrier mesh layer 330 may have a mesh structure, and be made of a metal that does not easily melt by heat. Accordingly, when flames, high temperature particles and gases generated from the battery module 10 come out of the venting holes 321 via the holes 11, the flames and high temperature particles are blocked by the flame barrier mesh layer 330 so as to prevent leakage, and only the gases are selectively vented.

In the end, when flames, sparks and high temperature particles are generated from the battery module 10 in which the fire occurred, the flames, sparks and high temperature particles may be isolated in the corresponding battery module 10 so as to prevent leakage, thereby minimizing thermal damage that may occur to other battery modules 10. Additionally, the large volume of gases that needs to be managed to deal with risks may be easily vented to the outdoors, thereby preventing or delaying thermal runaway in the battery pack.

The flame-retardant pad layer 340 is disposed in contact with the lower plate 320, and comes into close contact with the battery module 10. Here, the flame-retardant pad layer 340 may be made of a material having low thermal conductivity and high heat resistance (for example, silicon, mica). In the presence of the flame-retardant pad layer 340, when a fire occurs in the battery module 10, it is possible to minimize the movement of heat, high temperature particles, flames generated from the corresponding battery module 10 to the upper part of the battery module 10 and propagation to the adjacent battery cells 111.

The flame-retardant pad layer 340 has a vent slit 341 in an area corresponding to the venting holes 321 of the lower plate 320, and the vent slit 341 is configured to be torn when higher pressure than the allowable pressure is applied. The vent slit 341 may be in the shape of an H- or I-shaped cut dashed line. For example, when higher pressure than the allowable design pressure is applied to the battery module 10 in which the fire occurred, the vent slit 341 is torn to allow venting gases to exit.

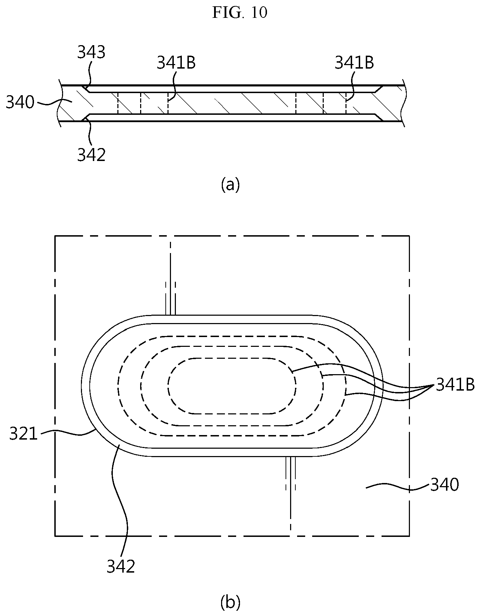

Alternatively, the vent slit 341B may include a plurality of oval or elliptical shapes having a gradual increase in size as shown in FIG. 10. In this case, the size of the vent slit 341B differentially cut at higher pressure than the allowable design pressure may vary, and in turn, the vent area of venting gases may change. For example, within a preset pressure range, the smallest oval or elliptical vent slit 341B may be broken and venting gases may be vented, and above the preset pressure range, the intermediate oval or elliptical vent slit 341B or the largest oval or elliptical vent slit 341B may be broken as well and a larger amount of venting gases may be vented.

The top plate portion 300 may be coupled to the pack tray 100 and the internal partition wall 110 with the fixing screws 350. Additionally, a sealing member 360 may be disposed between the top plate portion 300 and the pack tray 100 to completely isolate the battery module 10 and the adjacent other battery module 10 from each other.

According to the above-described exemplary configuration, it may be possible to easily vent gases to the outdoors and prevent leakage of flames or high temperature particles in the event of the fire in the battery module 10.

Additionally, according to the above-described exemplary configuration, it may be possible to minimize thermal damage that may occur to other battery modules 10 due to gases and sparks generated from the battery module 10 in which the fire occurred, thereby preventing or delaying thermal runaway in the battery pack.

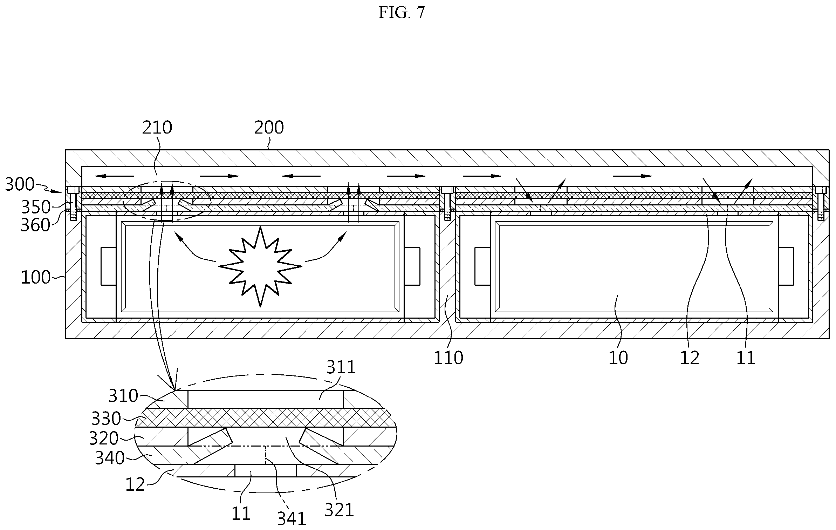

FIG. 7 is a diagram showing the vent path of venting gases along the passage in the battery pack according to an embodiment of the present disclosure.

Hereinafter, the venting process of venting gases according to this embodiment will be described in detail with reference to FIGS. 1 to 7.

First, as shown in FIG. 7, in the event of a fire in the specific battery module 10, the pressure in the module case 12 of the corresponding battery module 10 rises, and accordingly, the pressure below the flame-retardant pad layer 340 rises by venting gases released along the holes 11.

Subsequently, when the pressure rises above the design pressure, the vent slit 341 of the flame-retardant pad layer 340 adjacent to the corresponding battery module 10 is torn and cut and flames and high temperature particles including the venting gases flow upward.

Subsequently, the mesh structure of the flame barrier mesh layer 330 present on the venting holes 311, 321 of the upper and lower plates 310, 320 allows the venting gases to pass through and does not allow the flames or particles to pass through. Accordingly, it may be possible to easily vent the venting gases to the outdoors and prevent leakage of the flames or high temperature particles, thereby minimizing thermal damage that may occur to other battery modules 10 and preventing or delaying thermal runaway in the battery pack.

Subsequently, the venting gases may pass through the venting holes 311 of the upper plate 310 and temporarily flow or move in the vent passage 210, and although not shown, may be safely vented to the outdoors through an additional vent line. In this process, there is a likelihood that the venting gases may enter the adjacent battery module 10, but as shown in FIG. 7, the vent slit 341 of the flame-retardant pad layer present on the adjacent battery module 10 is still closed, so it may be possible to prevent the venting gases from entering other battery module 10, thereby minimizing thermal damage that may occur to other battery modules 10.

In addition, since the vent passage 210 takes into account the volume of venting gases, it may be possible to delay thermal damage all over the other battery modules 10 in the battery pack and obtain the evacuation time before thermal runaway.

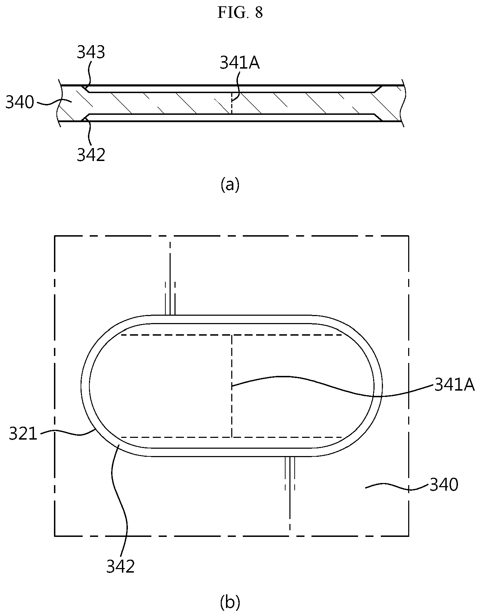

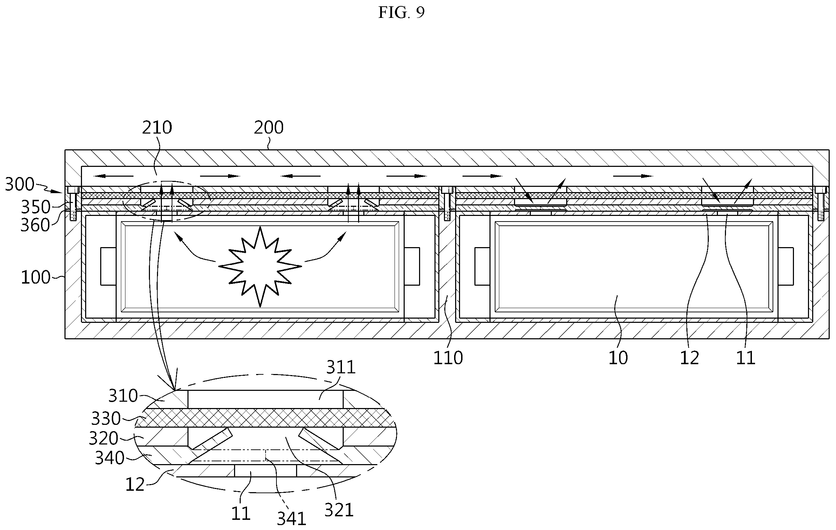

Subsequently, other embodiments of the battery module 10 of the present disclosure will be briefly described with reference to FIGS. 8 and 9.

FIG. 8 is a schematic cross-sectional view and a bottom view of the flame-retardant pad layer according to another embodiment of the present disclosure, and FIG. 9 is a schematic longitudinal cross-sectional view of the battery pack including the top plate portion with the flame-retardant pad layer according to another embodiment of the present disclosure.

The same reference numerals as the previous drawings indicate the same elements, and redundant description of the same elements is omitted and difference(s) between this embodiment and the previous embodiment will be described.

When compared with the previous embodiment, the battery module 10 according to another embodiment of the present disclosure has an additional configuration to the flame-retardant pad layer 340. The flame-retardant pad layer 340 may include an inlet region portion 342 disposed on the battery module 10 side and tapered inward in the thicknesswise direction to guide the entry of venting gases, and an outlet region portion 343 disposed on the lower plate 320 side and tapered to expand as much as the inner diameter of the venting hole 311.

As shown in FIG. 8, the inlet region portion 342 is tapered inward in the thicknesswise direction, allowing gases generated from the battery module 10 to enter the venting hole 321 more easily. Additionally, the outlet region portion 343 is disposed on the lower plate 320 side, and tapered to expand as much as the inner diameter of the venting hole 311, allowing easier venting through the venting holes 311 and the vent passage 210.

Accordingly, it may be possible to easily vent the gases to the outdoors through the vent passage 210, thereby minimizing thermal damage that may occur to other battery modules 10 and preventing or delaying thermal runaway in the battery pack.

Additionally, compared to the first embodiment, the flame-retardant pad layer 340 of the second embodiment has the vent slit 341A of smaller thickness or size, and accordingly it may be possible to precisely adjust the pressure range in which the vent slit 341A is cut, thereby achieving fine control of the gas venting according to the amount of venting gases.

Although not shown, the battery pack 1 according to the present disclosure may further include a variety of devices for controlling the charge and discharge of the battery modules 10, for example, Battery Management System (BMS), a current sensor, a fuse and the like.

The battery pack 1 according to the present disclosure may be applied to a vehicle such as an electric vehicle or a hybrid electric vehicle. That is, the vehicle according to the present disclosure may include the battery pack 1 according to the present disclosure. The battery pack 1 may be installed at a vehicle body frame below the seat or a trunk space, and when installed in the vehicle, the battery pack may be placed upside down where necessary.

## Claims

1. A battery pack (1), comprising:
a pack tray (100) accommodating at least one battery module (10);
a pack cover (200) covering a top of the pack tray (100), and having a vent passage (210) of venting gas; and
a top plate portion (300) disposed between the pack tray (100) and the pack cover (200) and having a lower part facing the battery module (10) and an upper part communicating with the vent passage (210),
wherein the top plate portion (300) comprises:
a support frame (301) provided in a shape of framework;
an upper plate (310) and a lower plate (320) stacked upon each other, with edges supported by the support frame (301), and having venting holes (311, 321) through which the venting gas is vented; and
a flame barrier mesh layer (330) disposed between the upper plate (310) and the lower plate (320), and configured to prevent leakage of the flame or high temperature particle.

2. The battery pack (1) according to claim 1, wherein the top plate portion (300) further includes a flame-retardant pad layer (340) below the lower plate (320), and
wherein the flame-retardant pad layer (340) has a vent slit (341) in an area corresponding to the venting holes (321) of the lower plate (320), wherein the vent slit (341) is configured to be torn when higher pressure than an allowable pressure is applied.

3. The battery pack (1) according to claim 1, wherein the flame barrier mesh layer (330) has a mesh structure.

4. The battery pack (1) according to claim 1, wherein the pack tray (100) has an internal partition wall (110) to separate spaces in which the battery modules (10) are disposed, and
wherein the top plate portion (300) is fixed and coupled to the pack tray (100) and the internal partition wall (110).

5. The battery pack (1) according to claim 4, wherein the top plate portion (300) is coupled to the pack tray (100) and the internal partition wall (110) with fixing screws (350), and
wherein a sealing member (360) is disposed between the top plate portion (300) and the pack tray (100).

6. The battery pack (1) according to claim 2, wherein the flame-retardant pad layer (340) includes an inlet region portion (342) on a side of the battery module (10), wherein the inlet region portion (342) is tapered inward in a thicknesswise direction to guide entry of the venting gas.

7. The battery pack (1) according to claim 2, wherein the flame-retardant pad layer (340) includes an outlet region portion (343) on a side of the lower plate (320), wherein the outlet region portion (343) is tapered to expand as much as an inner diameter of the venting hole (311).

8. The battery pack (1) according to claim 2, wherein the vent slit (341) is in a shape of an H- or I-shaped cut dashed line.

9. The battery pack (1) according to claim 2, wherein the vent slit (341) includes a plurality of oval or elliptical shapes having a gradual increase in size.

10. A vehicle comprising the battery pack (1) according to any one of claims 1 to 9.

## Patentansprüche

1. Batteriepack (1), umfassend:
einen Packtrog (100), welcher wenigstens ein Batteriemodul (10) aufnimmt;
eine Packabdeckung (200), welche eine Oberseite des Packtrogs (100) abdeckt und einen Entlüftungskanal (210) eines Entlüftungsgases aufweist; und
einen oberen Plattenabschnitt (300), welcher zwischen dem Packtrog (100) und der Packabdeckung (200) angeordnet ist und einen unteren Teil, welcher dem Batteriemodul (10) zugewandt ist, und einen oberen Teil aufweist, welcher mit dem Entlüftungskanal (210) kommuniziert,
wobei der obere Plattenabschnitt (300) umfasst:
einen Halterungsrahmen (301), welcher in einer Form eines Rahmenwerks bereitgestellt ist;
eine obere Platte (310) und eine untere Platte (320), welche übereinander gestapelt sind, mit Rändern, welche durch den Halterungsrahmen (301) gehaltert sind, und welche Entlüftungslöcher (311, 321) aufweisen, durch welche das Entlüftungsgas entlüftet wird; und
eine Flammschutzgitterschicht (330), welche zwischen der oberen Platte (310) und der unteren Platte (320) angeordnet ist und dazu eingerichtet ist, ein Austreten der Flamme oder von Hochtemperaturpartikeln zu verhindern.

2. Batteriepack (1) nach Anspruch 1, wobei der obere Plattenabschnitt (300) unterhalb der unteren Platte (320) ferner eine flammhemmende Polsterschicht (340) umfasst und
wobei die flammhemmende Polsterschicht (340) in einem Bereich, welcher den Entlüftungslöchern (321) der unteren Platte (320) entspricht, einen Entlüftungsschlitz (341) aufweist, wobei der Entlüftungsschlitz (341) dazu eingerichtet ist, zerrissen zu werden, wenn ein höherer Druck als ein zulässiger Druck ausgeübt wird.

3. Batteriepack (1) nach Anspruch 1, wobei die Flammschutzgitterschicht (330) eine Gitterstruktur aufweist.

4. Batteriepack (1) nach Anspruch 1, wobei der Packtrog (100) eine interne Trennwand (110) aufweist, um Räume zu trennen, in welchen die Batteriemodule (10) angeordnet sind, und
wobei der obere Plattenabschnitt (300) an dem Packtrog (100) und der internen Trennwand (110) befestigt und damit gekoppelt ist.

5. Batteriepack (1) nach Anspruch 4, wobei der obere Plattenabschnitt (300) mit Befestigungsschrauben (350) mit dem Packtrog (100) und der internen Trennwand (110) gekoppelt ist und
wobei ein Dichtelement (360) zwischen dem oberen Plattenabschnitt (300) und dem Packtrog (100) angeordnet ist.

6. Batteriepack (1) nach Anspruch 2, wobei die flammhemmende Polsterschicht (340) an einer Seite des Batteriemoduls (10) einen Einlassbereichsabschnitt (342) umfasst, wobei der Einlassbereichsabschnitt (342) in einer Dickenrichtung verjüngt ist, um einen Eintritt des Entlüftungsgases zu leiten.

7. Batteriepack (1) nach Anspruch 2, wobei die flammhemmende Polsterschicht (340) an einer Seite der unteren Platte (320) einen Auslassbereichsabschnitt (343) umfasst, wobei der Auslassbereichsabschnitt (343) verjüngt ist, um sich so weit wir ein innerer Durchmesser des Entlüftungslochs (311) auszudehnen.

8. Batteriepack (1) nach Anspruch 2, wobei der Entlüftungsschlitz (341) in einer Form einer H- oder I-förmigen ausgeschnittenen gestrichelten Linie vorliegt.

9. Batteriepack (1) nach Anspruch 2, wobei der Entlüftungsschlitz (341) eine Mehrzahl von ovalen oder elliptischen Formen umfasst, welche eine allmähliche Vergrößerung aufweisen.

10. Fahrzeug, umfassend den Batteriepack (1) nach einem der Ansprüche 1 bis 9.

## Revendications

1. Bloc-batterie (1), comprenant :
un plateau de bloc (100) recevant au moins un module de batterie (10) ;
un couvercle de bloc (200) recouvrant un dessus du plateau de bloc (100), et comportant un passage d'évent (210) de gaz d'évent ; et
une partie plaque de dessus (300) disposée entre le plateau de bloc (100) et le couvercle de bloc (200) et comportant une partie inférieure faisant face au module de batterie (10) et une partie supérieure communiquant avec le passage d'évent (210),
dans lequel la partie plaque de dessus (300) comprend :
un châssis de support (301) prévu sous la forme d'un cadre ;
une plaque supérieure (310) et une plaque inférieure (320) empilées l'une sur l'autre, avec des bords supportés par le châssis de support (301), et comportant des trous d'évent (311, 321) à travers lesquels le gaz d'évent est évacué ; et
une couche de treillis barrière aux flammes (330) disposée entre la plaque supérieure (310) et la plaque inférieure (320), et configurée pour empêcher une fuite de la flamme ou de la particule à haute température.

2. Bloc-batterie (1) selon la revendication 1, dans lequel la partie plaque de dessus (300) inclut en outre une couche de rembourrage ignifuge (340) sous la plaque inférieure (320), et
dans lequel la couche de rembourrage ignifuge (340) comporte une fente d'évent (341) dans une zone correspondant aux trous d'évent (321) de la plaque inférieure (320), dans lequel la fente d'évent (341) est configurée pour être déchirée lorsqu'une pression supérieure à une pression admissible est appliquée.

3. Bloc-batterie (1) selon la revendication 1, dans lequel la couche de treillis barrière aux flammes (330) présente une structure de treillis.

4. Bloc-batterie (1) selon la revendication 1, dans lequel le plateau de bloc (100) comporte une paroi de séparation interne (110) pour séparer des espaces dans lesquels les modules de batterie (10) sont disposés, et
dans lequel la partie plaque de dessus (300) est fixée et couplée au plateau de bloc (100) et à la paroi de séparation interne (110).

5. Bloc-batterie (1) selon la revendication 4, dans lequel la partie plaque de dessus (300) est couplée au plateau de bloc (100) et à la paroi de séparation interne (110) avec des vis de fixation (350), et
dans lequel un organe d'étanchéité (360) est disposé entre la partie plaque de dessus (300) et le plateau de bloc (100).

6. Bloc-batterie (1) selon la revendication 2, dans lequel la couche de rembourrage ignifuge (340) inclut une partie région d'entrée (342) sur un côté du module de batterie (10), dans lequel la partie région d'entrée (342) est effilée vers l'intérieur dans un sens de l'épaisseur pour guider l'entrée du gaz d'évent.

7. Bloc-batterie (1) selon la revendication 2, dans lequel la couche de rembourrage ignifuge (340) inclut une partie région de sortie (343) sur un côté de la plaque inférieure (320), dans lequel la partie région de sortie (343) est effilée pour se dilater autant qu'un diamètre intérieur du trou d'évent (311).

8. Bloc-batterie (1) selon la revendication 2, dans lequel la fente d'évent (341) est en forme de ligne en pointillés coupée en forme de H ou de I.

9. Bloc-batterie (1) selon la revendication 2, dans lequel la fente d'évent (341) inclut une pluralité de formes ovales ou elliptiques présentant une augmentation progressive de taille.

10. Véhicule comprenant le bloc-batterie (1) selon l'une quelconque des revendications 1 à 9.
